# EUROPEAN PATENT APPLICATION

(11) **EP 3 410 584 A1**
(43) Date of publication of application: **05.12.2018**
(21) Application number: 18174935.9
(22) Date of filing: 29.05.2018
(51) Int. Cl.: H02K 9/06, H02K 9/22, H02K 7/04, H02K 1/27

(54) **MOTOR, BLOWING DEVICE, AND VACUUM CLEANER**

(30) Priority: 31.05.2017 JP 2017107305
(71) Applicant: Nidec Corporation, Kyoto-shi, Kyoto 601-8205 (JP)
(72) Inventor: KISHI, Sakae, Kyoto, 601-8205 (JP); SAWADA, Tomoyoshi, Kyoto, 601-8205 (JP); IWAO, Takumi, Kyoto, 601-8205 (JP)
(74) Representative: Stöckeler, Ferdinand

(57) **Abstract**

A motor (7) including a shaft (731) that is disposed along a vertically extending central axis (C) in which the shaft rotates about the central axis, a magnet (732) and a cooling member (734) that are fixed to the shaft (731), a stator (72) disposed so as to oppose the magnet (732) in a radial direction, the stator including a coil (724), a motor housing (71) that accommodates therein the shaft (731), the magnet (732), the stator (72), and the cooling member (734). The cooling member (734) opposes, in the axial direction, the magnet (732) directly or with another member interposed therebetween. A plurality of protruded portions are provided on the cooling member (734) in which the plurality of protruded portions are protruded in the radial direction and are disposed in a circumferential direction.

## Description

### Field of the Invention

The present disclosure relates to a motor, a blowing device, and a vacuum cleaner.

### Description of the Related Art

A conventional electric motor is disclosed in Japanese Unexamined Patent Application Publication No. 2003-23753. The electric motor in Japanese Unexamined Patent Application Publication No. 2003-23753 includes a frame, a stator, a rotor, and a cooling fan.

The stator, the rotor, and the cooling fan are accommodated in the frame. The rotor is rotatable relative to the stator. The rotor includes a shaft, and the shaft is supported by a bearing. The cooling fan is fixed to the shaft. An inlet port and an exhaust port are formed in the frame.

By rotating the cooling fan, cooling air enters the frame through the inlet port. The cooling air is discharged to the outside through the exhaust port after passing through the gap between the stator and the rotor that are heat generating elements and cooling the stator and the rotor.

### SUMMARY OF THE INVENTION

As described above, in Japanese Unexamined Patent Application Publication No. 2003-23753, the inside of the frame can be cooled with the cooling fan. However, in Japanese Unexamined Patent Application Publication No. 2003-23753, there is no consideration of efficiently cooling the magnet that easily becomes high in temperature.

A motor according to an exemplary embodiment of the present disclosure includes a shaft that is disposed along a vertically extending central axis in which the shaft rotates about the central axis, a magnet and a cooling member that are fixed to the shaft, a stator disposed so as to oppose the magnet in a radial direction, the stator including a coil, a motor housing that accommodates therein the shaft, the magnet, the stator, and the cooling member. The cooling member opposes, in the axial direction, the magnet directly or with another member interposed therebetween. A plurality of protruded portions are provided on the cooling member in which the plurality of protruded portions are protruded in the radial direction and are disposed in a circumferential direction.

The above and other elements, features, steps, characteristics and advantages of the present disclosure will become more apparent from the following detailed description of the preferred embodiments with reference to the attached drawings.

### BRIEF DESCRIPTION OF THE DRAWINGS

Fig. 1 is an overall perspective view of a vacuum cleaner according to an exemplary embodiment of the present disclosure;
Fig. 2 is an overall perspective view of a blowing device according to an exemplary embodiment of the present disclosure;
Fig. 3 is a longitudinal section of the blowing device according to an exemplary embodiment of the present disclosure;
Fig. 4 is a perspective view illustrating a state in which a fan casing has been dismounted from the blowing device;
Fig. 5A is a perspective view of the impeller dismounted from the state in Fig. 4, and Fig. 5B is a perspective view illustrating a state in which the impeller and a motor housing have been dismounted from the state in Fig. 4;
Fig. 6 is a perspective view illustrating a configuration around the stator core;
Fig. 7 is a perspective view illustrating a rotor mainly;
Fig. 8 is a perspective view of an enlarged portion in the rotor around a cooling member;
Fig. 9 is a graph illustrating an example in which temperatures of an upper portion of a coil was measured in a case in which the cooling member of the present exemplary embodiment was used;
Fig. 10 is a graph serving as a comparative example of Fig. 9;
Fig. 11 is a perspective view illustrating a cooling member according a modified exemplary embodiment. Fig. 12 is a plan view illustrating an example of a cooling member used to adjust a dynamic balance; and
Fig. 13 is a plan view of another example of a cooling member used to adjust the dynamic balance.

### DETAILED DESCRIPTION OF THE PREFERRED EMBODIMENTS

Hereinafter, exemplary embodiments of the present disclosure will be described with reference to the drawings. Note that in the present application, a direction in which a central axis of a blowing device extends is referred to as an "axial direction", a direction orthogonal to the central axis of the blowing device is referred to as a "radial direction", and a direction along an arc about the central axis of the blowing device is referred to as a "circumferential direction". Furthermore, the central axis extends in an "up-down direction", and in the present specification, shapes and positional relationships of the parts will be described while an intake side of the impeller is referred to as an "upper side". However, the "up-down direction" does not limit the positional relationship and the direction of the apparatus when the apparatus is actually incorporated in a piece of equipment. Furthermore, "upstream" and "downstream" denote the "upstream" and the "downstream", respectively, in the flowing direction of the air drawn in from an intake port when the impeller is rotated.

Furthermore, in the present specification, description of the shapes and positional relationships of the parts will be given while a direction in the vacuum cleaner approaching a floor surface is referred to as "downward" and a direction distancing away from the floor surface is referred to as "upward". Note that the directions are terms that are used merely for description and do not limit the actual positional relationships and the actual directions. Furthermore, the "upstream" and the "downstream" denote the "upstream" and "downstream", respectively, in the flowing direction of the air drawn in through the intake port when the blowing device is driven.

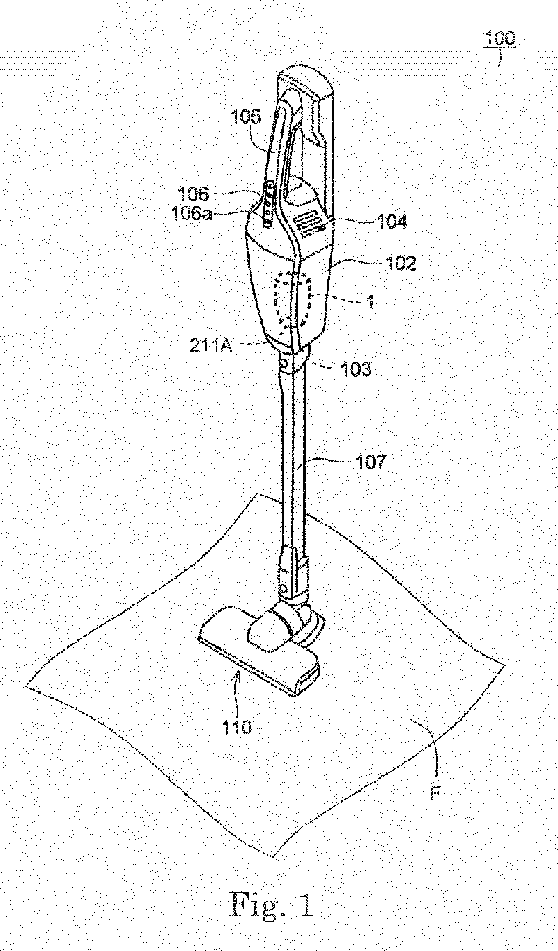

Herein, a vacuum cleaner that is an exemplary embodiment of the present disclosure will be described. Fig. 1 illustrates an overall perspective view of the vacuum cleaner according to an exemplary embodiment of the present disclosure. A vacuum cleaner 100 illustrated in Fig. 1 is a so-called electric stick vacuum cleaner and includes a casing 102 that has an intake port 103 and exhaust ports 104 open at an undersurface and an upper surface. A power supply cord (not shown) is lead out from a rear surface of the casing 102. The power supply cord is connected to a power outlet (not shown) provided in a lateral wall of a living room, for example, and supplies electric power to the vacuum cleaner 100. Note that the vacuum cleaner 100 may be an electric vacuum cleaner of a so-called robot type, a canister type, or a handy type.

An air passage (not shown) connecting the intake port 103 and the exhaust ports 104 are formed in the casing 102. A dust collecting portion (not shown), a filter (not shown), and a blowing device 1 are sequentially disposed in the air passage from the upstream side towards the downstream side. The dust and the like included in the air flowing inside the air passage are blocked by the filter and are collected in the dust collecting portion formed in a shape of a container. The dust collecting portion and the filter are detachable from the casing 102. With the above, a floor surface F can be cleaned.

A holding portion 105 and an operation unit 106 are provided above the casing 102. The user can move the vacuum cleaner 100 by holding the holding portion 105. The operation unit 106 includes a plurality of buttons 106a. The operation of the vacuum cleaner 100 is set by operating the buttons 106a. For example, by operating the buttons 106a, commands such as starting the drive, stopping the drive, and changing the rotation speed of the blowing device 1 are issued. A downstream end (an upper end in the drawing) of a tubular suction tube 107 is connected to the intake port 103. A suction nozzle 110 is attached to an upstream end of the suction tube 107 in a detachable manner with respect to the suction tube 107.

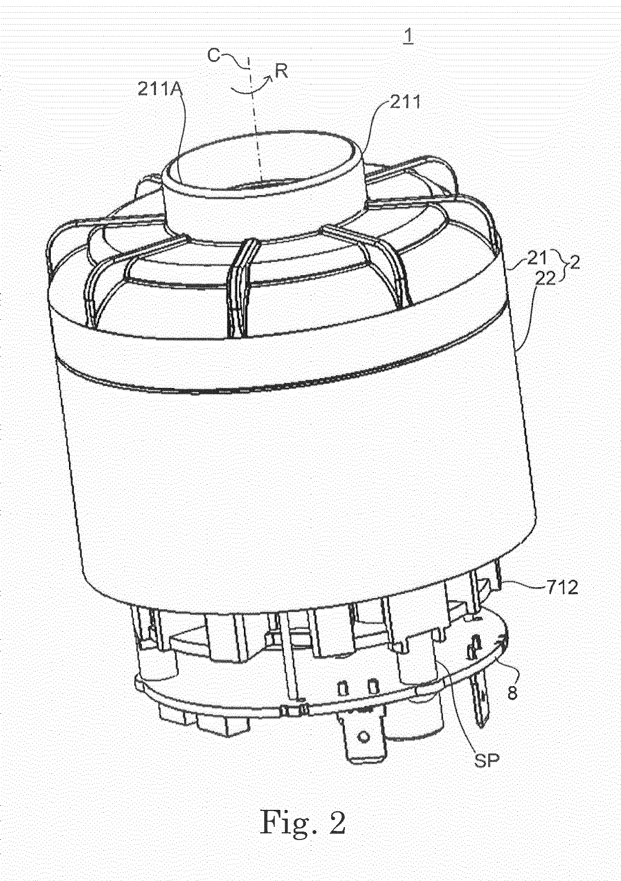

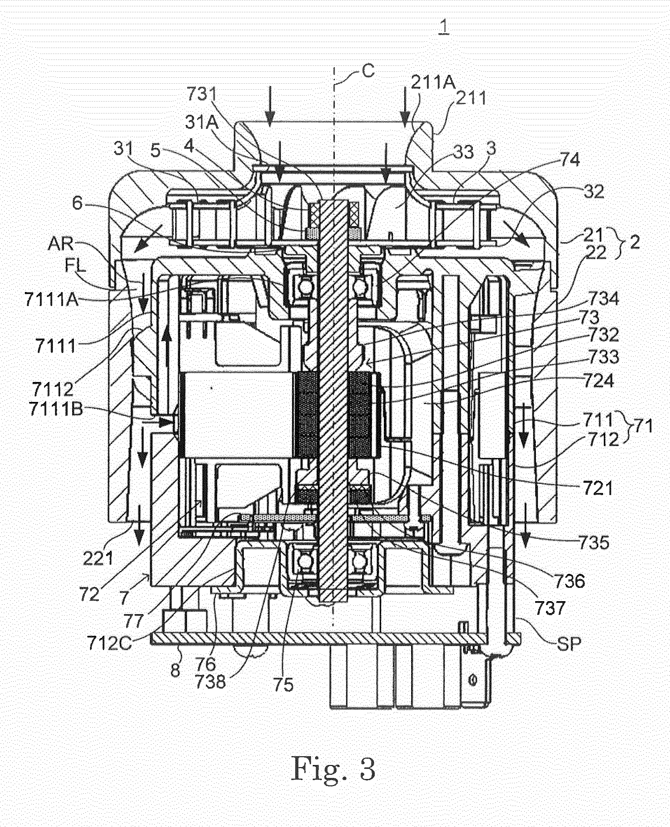

An overall configuration of the blowing device 1 will be described next. Fig. 2 is an overall perspective view of the blowing device 1 according to an exemplary embodiment of the present disclosure. Fig. 3 is a longitudinal section of the blowing device 1.

Broadly, the blowing device 1 mainly includes a fan casing 2, an impeller 3, a motor 7, and a substrate 8. By having the motor 7 rotationally drive the impeller 3 in a rotation direction R (counterclockwise in plan view) about a central axis C, air is drawn into the fan casing 2 from the upper side and is exhausted to the lower side from the fan casing 2.

The blowing device 1 includes the tubular fan casing 2 which has a round-shaped cross section in plan view. The fan casing 2 accommodates the impeller 3 and the motor 7. The fan casing 2 includes a fan cover 21 and an outer case 22. The fan cover 21 is disposed above the outer case 22 and is fixed to the outer case 22. The fan cover 21 covers the impeller 3. The outer case 22 covers a motor housing 71 of the motor 7. Note that not limited to being formed by separate members such as the fan cover 21 and the outer case 22, the fan casing 2 may be formed of a single member.

The fan cover 21 includes an intake portion 211 at the upper end portion thereof. The intake portion 211 includes an intake port 211A that curves inwardly in the radial direction. The intake port 211A is positioned above the upper end of the impeller 3. Furthermore, an exhaust port 221 open in the up-down direction is provided at a lower end of the outer case 22. Note that the blowing device 1 is provided in the vacuum cleaner 100 so that the intake port 211A is oriented downwards (Fig. 1).

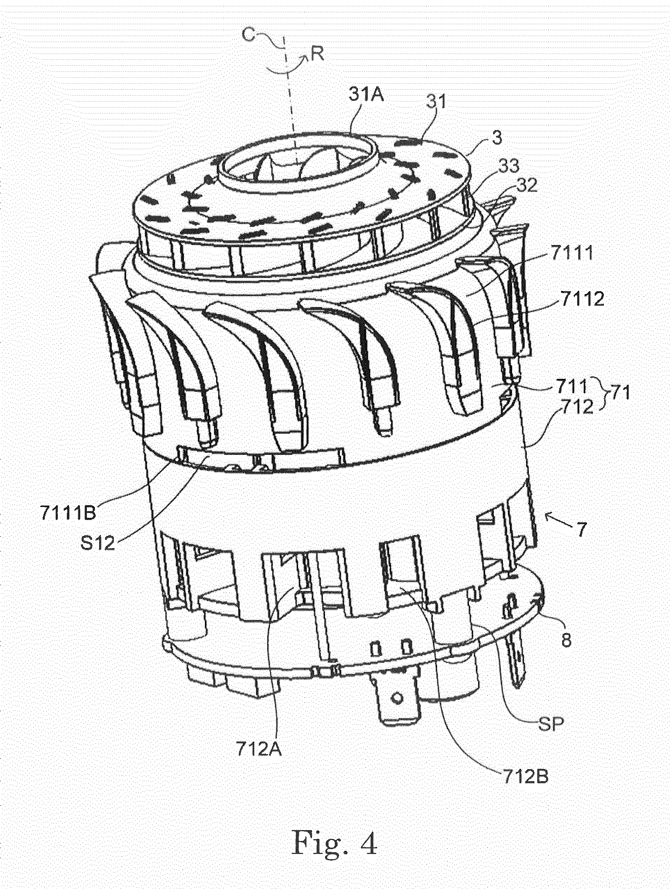

A configuration of the impeller 3 will be described next. Note that Fig. 4, which will also be referred to, is a perspective view illustrating a state in which the fan casing 2 has been dismounted from the blowing device 1. The impeller 3 is formed by a metal member. The impeller 3 includes an upper plate 31, a lower plate 32, and a plurality of blades 33.

The blades 33 are interposed between the lower plate 32 and the upper plate 31. The plurality of blades 33 are arranged in the circumferential direction.

The upper plate 31 connects upper end portions of the plurality of blades 33 to each other and includes an intake port 31A serving as an opening. The intake port 31A has a round shape in plan view. The lower plate 32 connects lower end portions of the plurality of blades 33 to each other and has a disk shape that spreads out in the radial direction.

The blades 33 are each a plate member that stands in the up-down direction and that extends in the radial direction from the inside towards the outside. In plan view, each blade 33 is curved so that an inner end thereof in the radial direction is, with respect to the outer end in the radial direction, inclined towards the front side in the rotation direction R so that the front side in the rotation direction R forms a protrusion.

When the motor 7 rotates the impeller 3 about the central axis C in the rotation direction R, air is drawn in from the upper side through the intake port 31A towards the blades 33 side, and the air that has been drawn in is guided towards the outside in the radial direction with the blades 33 and the lower plate 32 and is blown out to the outside in the radial direction of the impeller 3. The air that has been blown out from the impeller 3 is guided to a flow passage FL described later that is positioned below the impeller 3.

Subsequently, a configuration of the motor 7 will be described. Broadly, the motor 7 mainly includes the motor housing 71, a stator 72, a rotor 73, an upper bearing 74, a lower bearing 75, and a bracket 76.

The motor housing 71 includes an upper side housing 711 and a lower side housing 712. The upper side housing 711 is disposed above the lower side housing 712. The lower side housing 712 is fixed to the upper side housing 711 with a screw. The motor housing 71 accommodates therein the stator 72, the rotor 73, and lower bearing 75.

The upper side housing 711 includes a cup-shaped base portion 7111 open at the lower side. A bearing holding portion 7111A recessed downwards is provided at the middle of an upper end portion of the base portion 7111. The upper bearing 74 is fixed to an inner portion of the bearing holding portion 7111A. While the upper bearing 74 is a ball bearing, the upper bearing 74 may be a sleeve bearing or the like.

A plurality of stator blades 7112 disposed in the circumferential direction are formed on an outer peripheral surface of the base portion 7111. The stator blades 7112 extend in the up-down direction. Upper portions of the stator blades 7112 are, with respect to lower portions of the stator blades 7112, curved rearwardly in the rotation direction R. The flow of air blown out from the rotating impeller 3 is guided downwards between the stator blades 7112 that are adjacent to each other in the circumferential direction. With the above, the flow of air can be rectified and the air blowing efficiency of the blowing device 1 can be improved.

Furthermore, a lower end portion of the base portion 7111 includes vent holes 7111B that penetrate the base portion 7111 in the radial direction. The vent holes 7111B are arranged in a plural number in the circumferential direction and are arranged below the stator blades 7112. As described later, the vent holes 7111B are used to draw in flows of air from the outside to cool the inside of the motor housing 71.

The lower side housing 712 is formed in a substantially cylindrical shape open at the upper side. In the lower end portions of the lower side housing 712, communication passages 712A that penetrate therethrough in the up-down direction and in the radial direction and communication passages 712B that penetrate therethrough in the radial direction are formed. The communication passages 712A and 712B communicate the inside and the outside of the lower side housing 712 to each other. As described later, the communication passages 712A and 712B are used to discharge the flow of air to the outside to cool the inside of the motor housing 71.

Furthermore, at the center of the bottom portion of the lower side housing 712, a fitting hole 712C (Fig. 3) that penetrates therethrough in the up-down direction is formed. The bracket 76 is fitted into the fitting hole 712C from under. The bracket 76 is fixed to the lower side housing 712 with a screw. The lower bearing 75 is fixed to an inner portion of the bracket 76. While the lower bearing 75 is a ball bearing, the lower bearing 75 may be a sleeve bearing or the like.

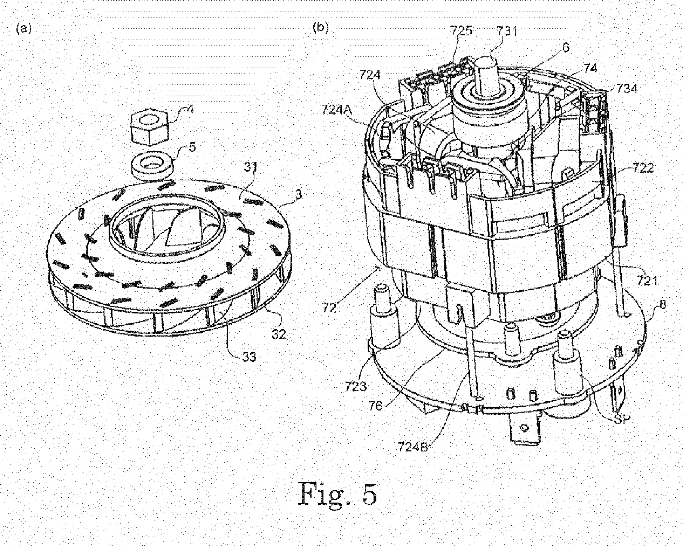

Subsequently, a configuration of the stator 72 will be described. Herein, Fig. 5A is a perspective view of the impeller 3 dismounted from the state in Fig. 4, and Fig. 5B is a perspective view illustrating a state in which the impeller 3 and the motor housing 71 have been dismounted from the state in Fig. 4. Both Fig. 5A and 5B will be referred. The stator 72 includes a stator core 721, an upper insulator 722, a lower insulator 723, a plurality of coils 724, and triple tabs 725.

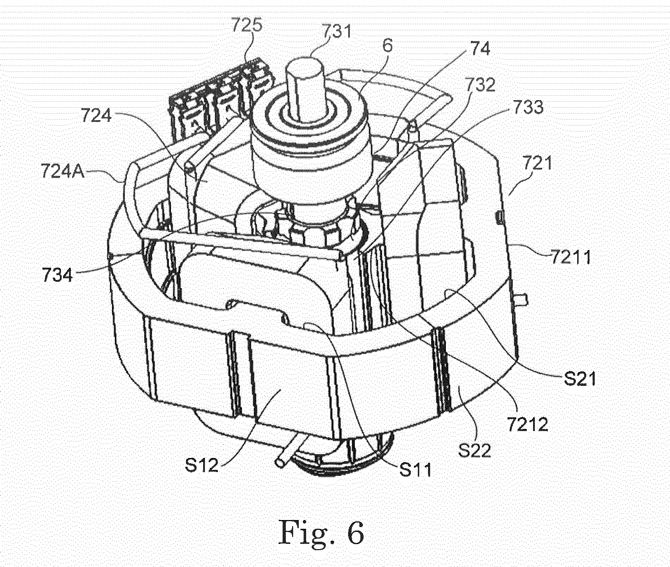

The stator core 721 is formed by stacking electromagnetic steel sheets in the up-down direction. Note that Fig. 6 is a perspective view illustrating a configuration around the stator core 721. Note that Fig. 6 does not illustrate the upper and lower insulators. The stator core 721 includes an annular core back 7211 and a plurality of teeth 7212. The plurality of teeth 7212 are portions that extend radially from an inner circumferential surface of the core back 7211 towards the inside in the radial direction. Each of the teeth 7212 has a substantially T-shape in plan view. In other words, each of the teeth 7212 includes a portion that extend in the radial direction and a portion that extends from an inner distal end portion thereof in the radial direction towards both sides in the circumferential direction.

The upper insulator 722 formed by an insulating material is fixed to the stator core 721 so as to cover an upper surface and a lateral surface of the stator core 721. In the present embodiment, the upper insulator 722 is constituted by a plurality of insulators divided in the circumferential direction. The lower insulator 723 formed by an insulating material is fixed to the stator core 721 so as to cover an under surface and the lateral surface of the stator core 721. In the present embodiment, the lower insulator 723 is constituted by a plurality of insulators divided in the circumferential direction. Note that the upper insulator and the lower insulator may each be configured as a single member.

The coils 724 are formed by winding conducting wire around the teeth 7212 with the portions of the upper insulator 722 and the portions of the lower insulator 723 that cover the teeth 7212 interposed therebetween. In other words, a coil 724 is provided in each of the teeth 7212.

The inner circumferential surfaces of the core back 7211 near the bases of the teeth 7212 are constituted by planar portions S11, and an outer peripheral surface of the core back 7211 are constituted by planar portions S12. With the above, collapsing of the coils 724 can be suppressed. Furthermore, the inner circumferential surfaces of the core back 7211 other than the portions near the bases of the teeth 7212 are constituted by curved surface portions S21, and the outer peripheral surface of the core back 7211 are constituted by planar portions S22. The curved surface portions S22 are in contact with an inner circumferential surface of motor housing 71. Gaps are formed between the planar portions S12 and the inner circumferential surface of the motor housing 71 in the radial direction. The vent holes 7111B are disposed outside of the planar portions S12 in the radial direction (Fig. 4). Accordingly, flows of air can flow into the gaps from the outside through the vent holes 7111B.

Lead wires 724A that are drawn out from the coils 724 are connected to the triple tabs 725 that are fixed to the upper insulator 722. Furthermore, lead wires 724B that are drawn out from the coils 724 to portions below the lower sides of the lower insulator 723 are connected to the substrate 8 described later.

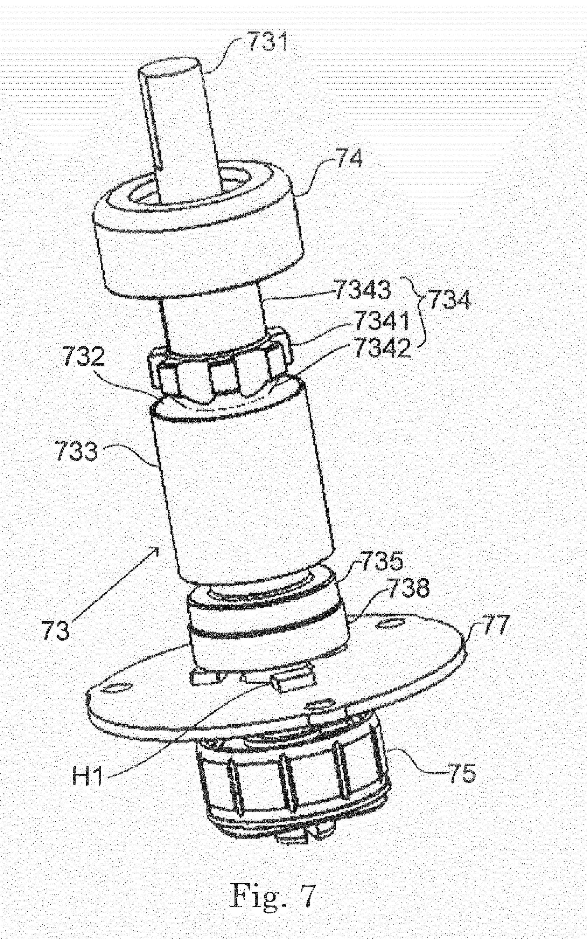

A configuration of the rotor 73 will be described next. The rotor 73 is disposed inside the stator 72 in the radial direction and is, relative to the stator 72, rotatable about the central axis C. Fig. 7 is a perspective view illustrating the rotor 73 mainly. The rotor 73 includes a shaft 731, a magnet 732, a first rotor cover 733, a cooling member 734, a first spacer 735, a yoke 736, a sensor magnet 737, and a second rotor cover 738.

The shaft 731 is a rod-shaped member disposed along the central axis C. The shaft 731 is rotatably supported by the upper bearing 74 and the lower bearing 75. The magnet 732 has a cylindrical shape and is fixed to the shaft 731. The first rotor cover 733 covers an outer peripheral surface of the magnet 732. The magnet 732 and the first rotor cover 733 are disposed on the inner side of the teeth 7212 in the radial direction and oppose the teeth 7212 in the radial direction (Fig. 6).

The cooling member 734 functions as a spacer and is disposed between the magnet 732 and the upper bearing 74 in the up-down direction. The cooling member 734 is fixed to the shaft 731. Detailed configuration and function of the cooling member 734 will be described later.

The yoke 736 is disposed below the magnet 732. The sensor magnet 737 is disposed below the yoke 736 and is in contact with the yoke 736. The yoke 736 and the sensor magnet 737 are fixed to the shaft 731. The second rotor cover 738 covers the yoke 736 and an outer peripheral surface of the sensor magnet 737. The first spacer 735 is disposed between the yoke 736 and the magnet 732.

Note that a sensor substrate 77 is provided below the sensor magnet 737 and above the lower bearing 75. A hall sensor H1 is mounted on an upper surface of the sensor substrate 77. The rotation position of the rotor 73 can be detected by the hall sensor H1 and the sensor magnet 737.

The round plate-shaped substrate 8 is disposed below the lower side housing 712 and the bracket 76. The substrate 8 is a rigid substrate or a flexible substrate. The lead wires 724B drawn out from the coils 724 are electrically connected to a drive circuit mounted on the substrate 8. With the above, electric power can be supplied to the coils 724.

A plurality of spacers SP disposed in the circumferential direction are disposed between the substrate 8 and the lower side housing 712. The substrate 8 is screwed to the lower side housing 712 with screws that pass inside the spacers SP.

A second spacer 6 is disposed on an upper side of the upper bearing 74. The second spacer 6 is fixed to the shaft 731. The lower plate 32 of the impeller 3 through which the shaft 731 is passed is disposed above the second spacer 6. A washer 5 through which the shaft 731 is passed is disposed on the lower plate 32. By screwing a nut 4 onto the shaft 731 and on the washer 5, the lower plate 32 is held between the washer 5 and the second spacer 6. With the above, the impeller 3 is fixed to the shaft 731.

When an electric current is supplied to the coils 724 with the drive circuit mounted on the substrate 8, the coils 724 generate magnetic fields. The interaction between the generated magnetic fields and a magnetic field generated by the magnet 732 rotates the rotor 73. With the above, the shaft 731 rotates about the central axis C and the impeller 3 fixed to the shaft 731 rotates as well.

The air that has been drawn into the impeller 3 through the intake port 211A and the intake port 31A with the rotation of the impeller 3 is blown out to the outside in the radial direction with the impeller 3. In Fig. 3, an airflow AR is indicated by solid line arrows. In the above, the fan casing 2 is disposed outside the motor housing 71 in the radial direction, and a flow passage FL is defined by a space interposed and formed between the fan casing 2 and the motor housing 71. The air blown out with the impeller 3 flows into the flow passage FL positioned below the impeller 3. The air that has flowed in is rectified downwards with the stator blades 7112, flows down through the flow passage FL, and is exhausted to the outside through the exhaust port 221 positioned at the lower end of the fan casing 2. With the above, air blowing operation is carried out.

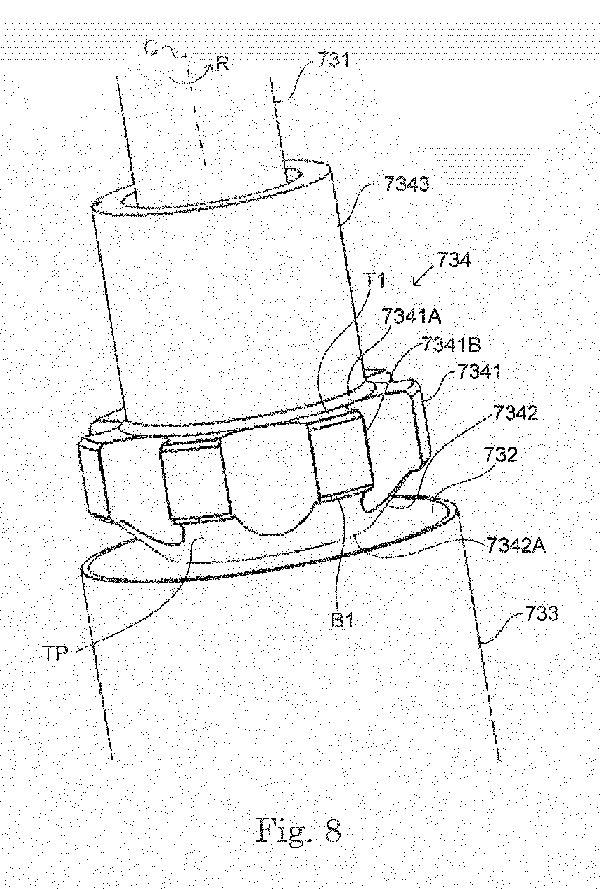

The cooling member 734 will be described in detail next. Fig. 8 is a perspective view of an enlarged portion in the rotor 73 around the cooling member 734. The cooling member 734 is a single member including a cooling portion 7341, a lower end portion 7342, and a tubular portion 7343. The cooling member 734 is formed of metal, for example.

The cooling portion 7341 includes a base portion 7341A fixed to the shaft 731, and protruded portions 7341B that protrude from the base portion 7341A towards the outer side in the radial direction. The protruded portions 7341B are disposed in a plural number in the circumferential direction.

The lower end portion 7342 is disposed below the cooling portion 7341. The lower end portion 7342 includes a tapered surface TP in which the outside diameter becomes larger as the tapered surface TP extends towards the upper side. In other words, the tapered surface TP is a conic surface. Furthermore, a lower end surface 7342A positioned at a lower end of the lower end portion 7342 has an annular shape in plan view and is directly in contact with an upper surface of the magnet 732.

When the cooling member 734 rotates with the rotation of the rotor 73, since the cooling member 734 has protruded portions 7341B, a downward flow of air is generated inside the motor housing 71. The flow of air passes downwards through the gaps between the teeth 7212 of the stator core 721 and the gaps between the teeth 7212 and the magnet 732, and the stator 72 and the magnet 732 are cooled. In the stator 72, the coils 724 that are the heat sources in particular can be cooled.

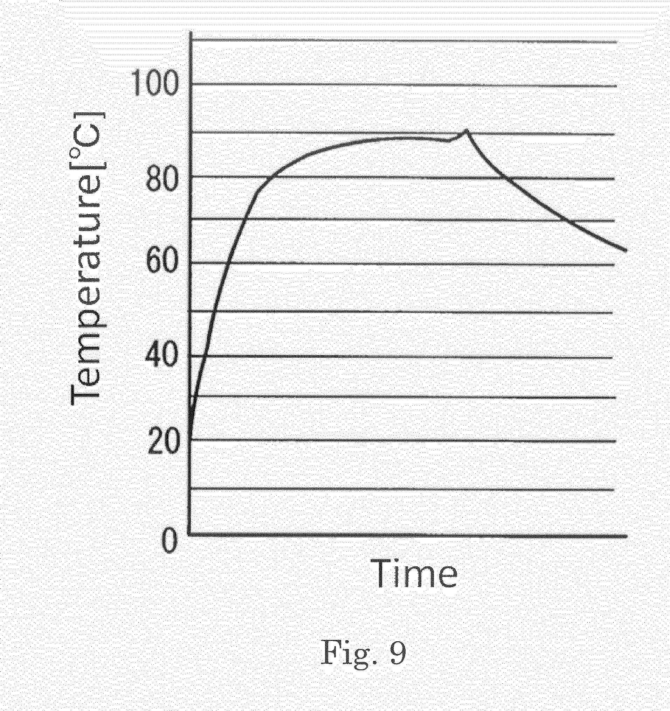

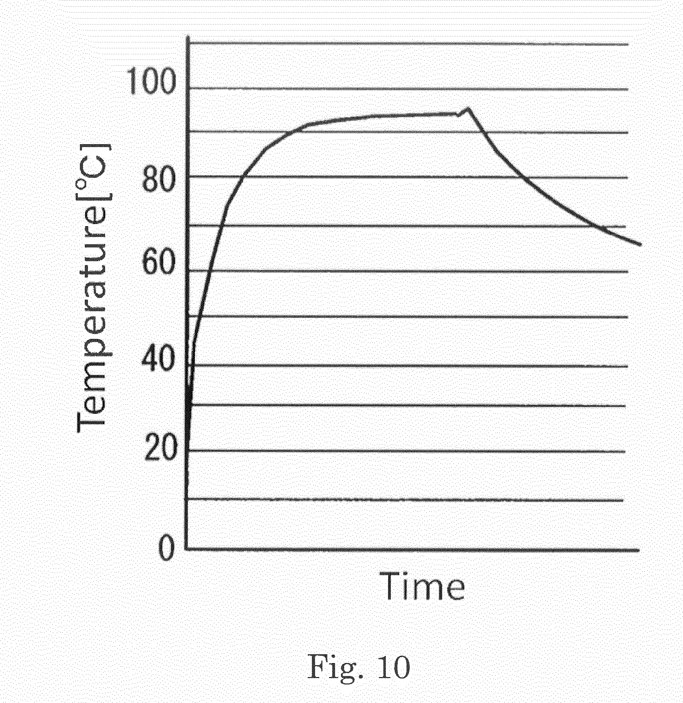

Fig. 9 is a graph illustrating an example in which temperatures of an upper portion of the coil was measured in a case in which the cooling member 734 of the present exemplary embodiment was used. Furthermore, as a comparison to Fig. 9, Fig. 10 is a graph illustrating an example in which temperatures of an upper portion of the coil was measured in a case in which a member having no protruded portions was used. In other words, in the case of Fig. 10, the portion in the used member equivalent to the cooling portion 7341 was a cylindrical shape functioning mainly as a spacer. In the present exemplary embodiment according to Fig. 9, compared with Fig. 10, the peak reached during the increase in the temperature of the upper portion of the coil was suppressed and the temperature reached after the peak during the decrease in temperature was suppressed as well. In the present exemplary embodiment, the cooling function is improved in the above manner.

Furthermore, since the cooling member 734 comes in direct contact with the magnet 732 in the axial direction, conduction of heat from the magnet 732 to the cooling member 734 occurs. Furthermore, owing to the protruded portions 7341B, the surface area in which the cooling portion 7341 comes in contact with the external air can be increased and release of heat, which has been transmitted by heat conduction, to the external air can be facilitated. Furthermore, since flows of air in the circumferential direction are created between the adjacent protruded portions 7341B with the rotation of the cooling member 734, the coefficient of heat transfer of the cooling portion 7341 to the air is improved and heat dissipation can be increased. With the above, the cooling efficiently of the magnet 732 can be improved.

Note that the length of the cooling member 734 in the axial direction may be shortened, and another member having a tubular shape in which the two ends thereof come in contact with the lower end surface 7342A of the cooling member and the upper surface of the magnet 732 may be disposed between the cooling member and the magnet 732. In other words, the cooling member may be in indirect contact with the magnet 732 in the axial direction with another member interposed therebetween. By so doing, heat can be guided by heat conduction from the magnet 732 to the cooling member through another member, and the magnet 732 can be cooled. Note that the above another member is desirably formed of metal, for example, that has satisfactory thermal conductivity.

Alternatively, the cooling member and the magnet 732 may be disposed with a gap in the axial direction interposed therebetween.
In such a case, the heat can be guided by heat conduction from the magnet 732 to the cooling member through the shaft 731, and the magnet 732 can be cooled.

As described above, the motor 7 according to the present exemplary embodiment is disposed along the central axis C that extends vertically and includes the shaft 731 that rotates about the central axis C, the magnet 732 and the cooling member 734 that are fixed to the shaft 731, the stator 72 that is disposed so as to oppose the magnet 732 in the radial direction and that includes coils 724, and the motor housing 71 that accommodates therein the shaft 731, the magnet 732, the stator 72, and the cooling member 734. The cooling member 734 opposes the magnet 732 in the axial direction directly or with another member interposed therebetween, and the cooling member 734 is provided with the plurality of protruded portions 7341B that protrude in the radial direction and that are disposed in the circumferential direction.

According to such a configuration, with the rotation of the cooling member 734 including the protruded portions 7341B, a flow of air can be generated inside the motor housing 71 and the inside of the motor housing 71 can be cooled. Furthermore, the magnet 732 can be cooled efficiently by thermal conduction from the magnet 732 to the cooling member 734 and heat transmitted from the cooling member 734 to the air.

Furthermore, as described above, the cooling member 734 is metal, for example. In such a case, the thermal conductivity of the cooling member 734 can be improved and the coolability of the magnet 732 can be improved.

As described above, the lower side housing 712 includes the communication passages 712A and 712B. The communication passages 712A and 712B communicate the inside and the outside of the lower side housing 712 to each other. The flow of air generated by the rotation of the cooling member 734 flowing downwards and inside the motor housing 71 is exhausted to the outside through the communication passages 712A and 721B. Furthermore, the upper end portion of the base portion 7111 of the upper side housing 711 is closed at the center with the upper bearing 74 and the shaft 731.

As described above, while the communication passages are formed in the lower end portion of the motor housing 71, the upper end portion is closed and is blocked from external air. Accordingly, the temperature tends to become higher inside the motor housing 71 in the upper side than in the lower side. Accordingly, in the present embodiment, the cooling member 734 is disposed above the magnet 732. With the above, the upper side inside the motor housing 71 can be cooled by generating a flow of air on the upper side inside the motor housing 71.

In other words, the communication passages 712A and 712B that communicate the inside and the outside are provided in the motor housing 71 and below the magnet 732, and the cooling member 734 is disposed above the magnet 732. With the above, the upper side inside the motor housing 71 where the temperature becomes high easily can be efficiently cooled.

Furthermore, in the cooling member 734, the tubular portion 7343 is positioned above the cooling portion 7341. The upper end surface of the tubular portion 7343 is in direct contact with the lower end surface of the upper bearing 74 in the axial direction. With the above, the heat is guided by thermal conduction from the upper bearing 74 to the cooling portion 7341 through the tubular portion 7343 and is transmitted from the cooling portion 7341 to the air; accordingly, the upper bearing 74 can be cooled efficiently.

Note that another member having a tubular shape may be disposed between the tubular portion 7343 and the upper bearing 74. In other words, the upper bearing 74 and the tubular portion 7343 interpose another member therebetween in the axial direction, the lower end surface of the another member is made to come in contact with the upper end surface of the tubular portion 7343, and the upper end surface of the another member is made to be in contact with the lower end surface of the upper bearing 74. In other words, the tubular portion 7343 is in indirect contact with the upper bearing 74 in the axial direction through the another member. In such a case, the heat can be guided by thermal conduction from the upper bearing 74 to the tubular portion 7343 through the another member.

Alternatively, the upper bearing 74 and the tubular portion 7343 may be disposed with a gap in the axial direction interposed therebetween. In such a case, the heat can be guided by thermal conduction from the upper bearing 74 to the tubular portion 7343 through the shaft 731.

In other words, the motor 7 further includes the upper bearing 74 that is fixed to the upper portion of the motor housing 71 and that rotatably supports the shaft 731, and the upper end portion of the cooling member 734 opposes the lower end portion of the upper bearing 74 in the axial direction. With the above, heat can be guided by thermal conduction from the upper bearing 74 to the cooling member 734, and the upper bearing 74 can be efficiently cooled.

Furthermore, the cooling member 734 includes the cooling portion 7341 that has the protruded portions 7341B, and the tubular portion 7343 that is disposed above the cooling portion 7341 and that extend in the axial direction. The upper end portion of the tubular portion 7343 is in contact with the lower end portion of the upper bearing 74. With the above, cooling member 734 can be used as a spacer between the upper bearing 74 and the magnet 732. Furthermore, since the heat of the upper bearing 74 is conducted more efficiently to the cooling member 734, the upper bearing 74 can be cooled efficiently.

Furthermore, as described above, the lower end portion 7342 includes the tapered surface TP that is a conic surface. With the above, in a case in which the cooling member 734 is a magnetic material, a magnetic path can be prevented from being formed between the magnet 732 and the cooling member 734. In other words, the tapered surface TP that spreads outward as the tapered surface TP extends towards the upper side is provided in the lower end portion 7342 of the cooling member 734. Note that the tapered surface TP provided in the lower end portion 7342 is not limited to a conic surface and, for example, may have a shape that has a square shape in plan view and that spreads outward as the shape extends towards the upper side.

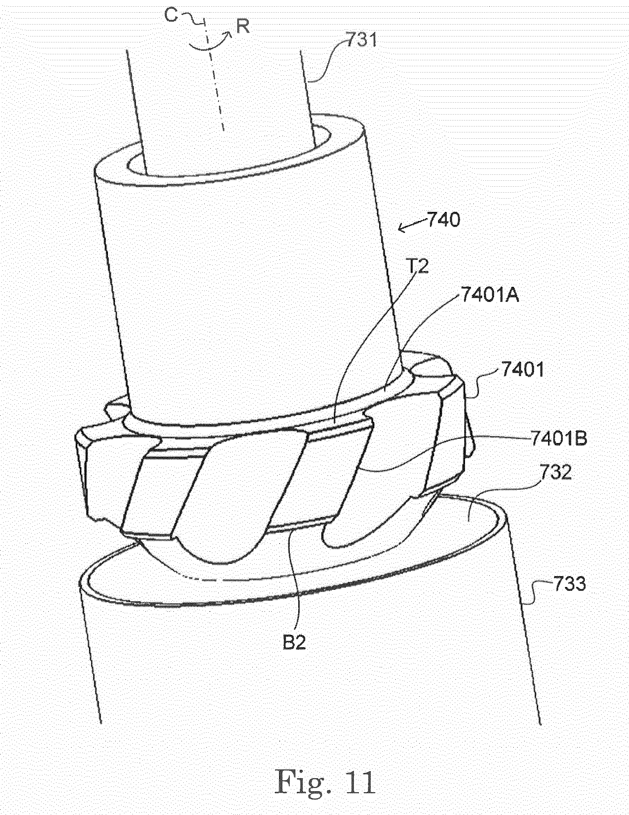

Fig. 11 is perspective view according to a modification of the exemplary embodiment illustrated in Fig. 8. In the exemplary embodiment illustrated in Fig. 11, compared with Fig. 8, the shape of the cooling member has been changed. More specifically, in a cooling member 740 illustrated in Fig. 11, the shape of the cooling portion is different when compared with that of the cooling member 734 illustrated in Fig. 8.

A cooling portion 7401 included in the cooling member 740 includes a base portion 7401A and a plurality of protruded portions 7401B that protrude towards the outer side in the radial direction from the base portion 7401A. In the cooling portion 7341 illustrated in Fig. 8, upper ends T1 and lower ends B1 of the protruded portions 7341B are at the same positions in the rotation direction R. Conversely, in the cooling portion 7401 illustrated in Fig. 11, upper ends T2 of the protruded portions 7401B are disposed on the front side in the rotation direction R with respect to the lower ends B2.

In other words, the upper ends T2 of the protruded portions 7401B are disposed on the front side in the rotation direction R of the shaft 731 with respect to the lower ends B2 of the protruded portions 7401B. With the above, the air blowing efficiency of the flow of air generated by rotation of the cooling member can be improved and the coolability inside the motor housing can be improved.

Furthermore, the balance of the centrifugal force generated according to the weight distribution of the rotor 73 when the rotor 73 is rotated is referred to as a dynamic balance. In the present embodiment, the dynamic balance can be adjusted with the cooling member.

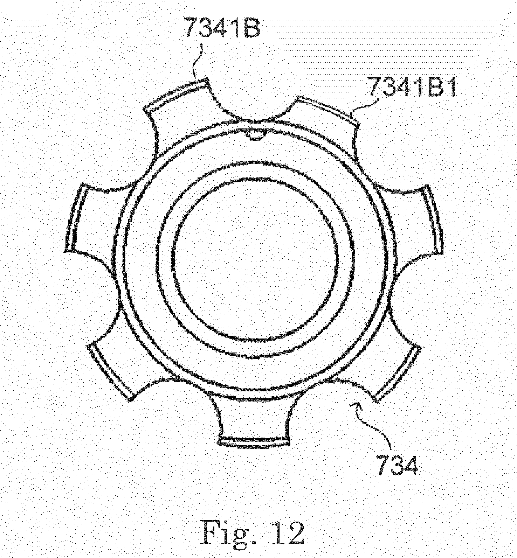

Fig. 12 is a plan view illustrating an example of the cooling member 734 that has been processed axially asymmetric to adjust the dynamic balance of the rotor 73. In the example in Fig. 12, among seven protruded portions 7341B, the amount of protrusion of a single protruded portion 7341B1 is smaller than the amount of protrusion or the other six protruded portions 7341B. The amount of protrusion is reduced by cutting a lateral surface of the protruded portion 7341B on the outside in the radial direction. Note that the number of protruded portions in which the amount of protrusion is reduced is not limited to one and can be a plural number.

In other words, the cooling member 734 includes the cooling portion 7341 that has protruded portions 7341B, and the cooling portion 7341 is axially asymmetric. With the above, the weight distribution of the cooling member 734 in the radial direction can be adjusted and the adjustment of the dynamic balance of the rotor 73 can be made. For example, the adjustment of the dynamic balance of the rotor 73 can be made by forming an axially symmetric cooling portion and by processing the cooling portion into an axially asymmetrical shape after the motor 7 has been assembled, so as to adjust the weight distribution of the cooling member in the radial direction.

Furthermore, among the plurality of protruded portions 7341B, the amount of protrusion of one or some of the protruded portions 7341B1 is smaller in the radial direction than that of the other protruded portions 7341B. With the above, by cutting the lateral surfaces of one or some of the protruded portions on the outside in the radial direction, the adjustment of the dynamic balance can be made easily.

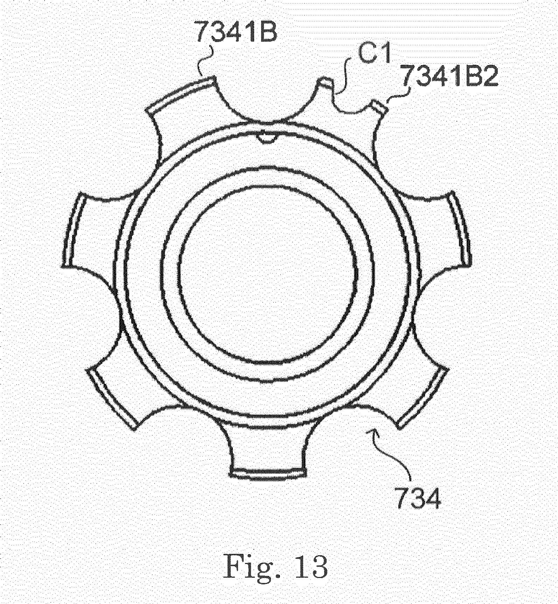

Furthermore, in order to make the cooling member 734 axially asymmetric, the cooling member 734 may be, as another example, made in a manner illustrated in Fig. 13. In the cooling member 734 illustrated in Fig. 13, among seven protruded portions 7341B, a recess C1 that is recessed inwardly in the radial direction with respect to the lateral surface on the outer side in the radial direction is formed in a single protruded portion 7341B2. Note that the number of protruded portions in which the recess is provided may be a plural number. In other words, among the plurality of protruded portions 7341B, one or some of the protruded portions 7341B2 each have a recess C1 that is recessed inwardly in the radial direction. With the above, by cutting the lateral surfaces of one or some of the protruded portions on the outside in the radial direction, the adjustment of the dynamic balance can be made easily.

Note that the above-described processing of making the cooling member axially asymmetric can be applied to the cooling member 740 illustrated in Fig. 11.

When the rotor 73 rotates and the cooling member 734 and the impeller 3 rotate, the airflow AR that flows downward through the flow passage Fl defined by the space between the fan casing 2 and the motor housing 71 is generated. Due to a difference in atmospheric pressure, a portion of the airflow AR passes through the vent holes 7111B from the flow passage FL and flows into the motor housing 71. The airflow AR that has flowed in flows upward in the space outside the stator 72 in the radial direction and reaches a portion above the stator 72. Furthermore, with the rotation of the cooling member 734, the airflow AR flows downwards while cooling the stator 72 and the like and is exhausted to the outside through the communication passages 712A and 712B.

In other words, the blowing device 1 of the present exemplary embodiment includes the motor 7, the impeller 3 fixed to the shaft 731, and the fan casing 2 that is disposed outside of the motor housing 71 in the radial direction and that forms the flow passage FL in the gap between the motor housing 71. The vent holes 7111B that penetrate in the radial direction and that communicate the flow passage FL and the inside of the motor housing 71 to each other are formed in the motor housing 71. With the above, the air drawn in from the outside of the blowing device 1 with the rotation of the impeller 3 is guided into the motor housing 71 through the vent holes 7111B, and a flow of air is generated inside the motor housing 71 with the rotation of the cooling member 734. Accordingly, the inside of the motor housing 71 can be cooled efficiently.

As described above, the vacuum cleaner 100 according to the present exemplary embodiment includes the motor 7 or the blowing device 1 described above. With the above, a vacuum cleaner 100 with improved cooling efficiently can be obtained. Note that not limited to the vacuum cleaner, the blowing device can be mounted in various pieces of OA equipment, medical appliances, transportation equipment, or household appliances other than a vacuum cleaner.

Furthermore, the motor does not necessarily have to be used by being mounted in a blowing device. In other words, it is not a requisite to use the airflow generated by the impeller to cool a motor.

Note that the exemplary embodiments described above can be modified in various manners within the scope of the present disclosure.

The present disclosure can be used in a blowing device of a vacuum cleaner, for example.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope of the present disclosure. The scope of the present disclosure, therefore, is to be determined solely by the following claims.

## Claims

1. A motor (7) comprising:
a shaft (731) that is disposed along a vertically extending central axis (C), the shaft (731) rotating about the central axis (C);
a magnet (732) and a cooling member (734, 740) that are fixed to the shaft (731);
a stator (72) disposed so as to oppose the magnet (732) in a radial direction, the stator (72) including a coil (724); and
a motor housing (71) that accommodates therein the shaft (731), the magnet (732), the stator (72), and the cooling member (734, 740),
wherein the cooling member (734, 740) opposes, in the axial direction, the magnet (732) directly or with another member interposed therebetween, and
wherein a plurality of protruded portions (7341B, 7341B1, 7341B2, 7401B) are provided on the cooling member (734, 740), the plurality of protruded portions (7341B, 7341B1, 7341B2, 7401B) being protruded in the radial direction and being disposed in a circumferential direction.

2. The motor (7) according to Claim 1,
wherein the cooling member (734, 740) is a metal member.

3. The motor (7) according to Claim 1 or 2,
wherein a communication passage (712A, 712B) is provided in the motor housing (71), the communication passage (712A, 712B) communicating an inside and an outside of the motor housing (71) to each other at a portion below the magnet (732), and
wherein the cooling member (734, 740) is disposed above the magnet (732).

4. The motor (7) according to any one of Claims 1 to 3, further comprising:
an upper bearing (74) fixed to an upper portion of the motor housing (71), the upper bearing (74) rotatably supporting the shaft (731),
wherein an upper end portion of the cooling member (734) opposes a lower end portion of the upper bearing (74) in the axial direction.

5. The motor (7) according to Claim 4,
wherein the cooling member (734) includes
a cooling portion (7341) that includes the protruded portions (7341B, 7341B1, 7341B2), and
a tubular portion (7343) disposed above the cooling portion (7341), the tubular portion (7343) extending in the axial direction, and
wherein an upper end portion of the tubular portion (7343) is in contact with the lower end portion of the upper bearing (74).

6. The motor (7) according to any one of Claims 1 to 5,
wherein a lower end portion of the cooling member (734, 740) is provided with a tapered surface (TP) that spreads outward as the tapered surface (TP) extends towards an upper side.

7. The motor (7) according to any one of Claims 1 to 6,
wherein upper ends of the protruded portions (7401B) are disposed on a front side in the rotation direction of the shaft (731) with respect to lower ends of the protruded portions (7401B).

8. The motor (7) according to any one of Claims 1 to 7,
wherein the cooling member (734) includes a cooling portion (7341) that includes the protruded portions (7341B, 7341B1, 7341B2), and
wherein the cooling portion (7341) is axially asymmetric.

9. The motor (7) according to Claim 8,
wherein among the plurality of protruded portions (7341B, 7341B1), an amount of protrusion of one or some of the protruded portions (7341B1) in the radial direction is smaller than that of other protruded portions (7341B).

10. The motor (7) according to Claim 8,
wherein among the plurality of protruded portions (7341B, 7341B2), one or some of the protruded portions (7341B2) include a recess (C1) that is recessed inwards in the radial direction.

11. A blowing device (1) comprising:
the motor (7) according to any one of Claims 1 to 10;
an impeller (3) fixed to the shaft (731); and
a fan casing (2) disposed outside of the motor housing (71) in the radial direction, the fan casing (2) forming a flow passage (FL) in a gap between the motor housing (71),
wherein a vent hole (711B) that penetrates the motor housing (71) in the radial direction and that communicates the flow passage and an inside of the motor housing (71) to each other is formed in the motor housing (71).

12. A vacuum cleaner (100) comprising:
the motor (7) according to any one of Claims 1 to 10 or the blowing device (1) according to Claim 11.
